(19) Europäisches Patentamt / European Patent Office / Office européen des brevets

(11) **EP 3 572 617 A1**

(12) **EUROPEAN PATENT APPLICATION**

(43) Date of publication:
**27.11.2019  Bulletin 2019/48**

(51) Int Cl.:
***E21B 41/00*** *(2006.01)*

(21) Application number: **18173880.8**

(22) Date of filing: **23.05.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Welltec Oilfield Solutions AG**<br>**6300 Zug (CH)**<br><br>(72) Inventor: **NESGAARD, Carsten**<br>**3450 Allerød (DK)**<br><br>(74) Representative: **Hoffmann Dragsted A/S**<br>**Rådhuspladsen 16**<br>**1550 Copenhagen V (DK)** |

(54) **DOWNHOLE CHARGING SYSTEM AND METHOD**

(57)   A downhole charging system comprising a primary side and a secondary side is provided. The primary side comprises a power transmit coil arranged to receive power from a power source with a source frequency and the secondary side comprises a power receive coil arranged to deliver power to a load. The power transmit coil and the power receive coil are further arranged such that they are inductively coupled. The primary side and/or the secondary side comprises at least one tunable element connected to the coil on the same side as the tunable element. The system further comprises at least one controller configured to control the impedance of the tunable element such that the impedance of the tunable element and the coil on the same side as the tunable element is optimised in view of power transfer.

Fig. 10

**Description**

The present invention relates to a downhole charging system for charging a power receiving unit arranged outside of a well tubular metal structure. The present invention also relates to a method for a controller of a downhole charging system according to the present invention.

When having sensors mounted for measuring a condition or a property outside a well tubular metal structure downhole, the measured data is transmitted wirelessly to the surface. Having a wired connection to the sensor would force significant changes to the well tubular structure causing substantial weakening of the completion with a risk of creating e.g. blow-outs or similar uncontrolled occurrences.

The sensors will have to operate autonomously since replacement of power source or service of the sensor downhole is virtually impossible. Furthermore, it is very difficult to get these sensors or other instruments to function over time, as the battery power is very limited downhole because the batteries cannot withstand high temperatures and pressures without deteriorating quickly.

One solution to this problem is presented in EP 3 101 220 A1 by the same applicant. Here a downhole completion system for wirelessly charging a device outside a well tubular metal structure is described. The system works by having one power receiving coil of a device outside the well tubular metal structure arranged parallel or coincident with a power transmitting coil arranged in a tool inside the well tubular metal structure.

One problem with the prior art is that the efficiency of power transfer to the receiving coil will depend greatly on environmental factors. The temperature of the downhole equipment will cause frequency drift of electronics, which will also be affected by different types of the surrounding medium, e.g. gases, soil types or different concentrations of brine.

From the above, it is understood that there is room for improvements.

An object of the present invention is to provide a new type of downhole charging system which is improved over prior art and which eliminates or at least mitigates some of the drawbacks discussed above. More specifically, an object of the invention is to provide a downhole charging system that is capable of optimising power transfer and to automatically compensate for temperature variations and manufacturing tolerances. These objects are achieved by the technique set forth in the appended independent claims with preferred embodiments defined in the dependent claims related thereto.

In a first aspect, a downhole charging system is provided. The charging system comprises a tunable element and a controller being configured to match the impedance of the tunable element, in combination with an associated inductive coil, with a source frequency of the power source. This downhole charging system is advantageous since it allows for auto-tuning of the resonance frequency in order to optimise power transfer downhole.

The above objects, together with numerous other objects, advantages and features, which will become evident from the below description, are accomplished by a solution in accordance with the present invention by a downhole charging system for charging a power receiving unit arranged outside of a well tubular metal structure comprising a primary side and a secondary side, wherein the primary side comprises a power transmit coil arranged to receive power from a power source with a source frequency and the secondary side comprises a power receive coil arranged to deliver power to a load, the power transmit coil and the power receive coil are arranged such that they are inductively coupled, and the primary side and/or the secondary side comprise(s) at least one tunable element having an impedance and being connected to the coil on the same side as the tunable element, wherein the charging system further comprises at least one controller configured to control the impedance of the tunable element such that the impedance of the tunable element and the coil on the same side as the tunable element is optimised in view of power transfer. One benefit of this embodiment is that it allows the downhole charging system to work efficiently with changing system parameters. If e.g. the inductance of the coil or the frequency of the source is changed, the tunable element can be adjusted accordingly.

The source frequency may in some embodiments be very low, essentially corresponding to direct current (DC).

Also, the downhole charging system may further comprise one or more sensors. The sensor(s) may be configured to communicate sensor data to the controller and the controller may be arranged to control the impedance of the tunable element based on the sensor data. This is advantageous at least because it allows the charging system to be automatically controlled based on sensor data.

Moreover, the one or more sensors may comprise an environmental sensor arranged to measure sensor data relating to environmental conditions relevant to the system

The downhole charging system may be further evolved by making the one or more sensors comprising the environmental sensor. This allows for automatic control and compensation in case of e.g. changing environmental conditions, such as temperature that cause the resonance frequency to shift.

Furthermore, the one or more sensors may comprise a voltage sensor, current sensor or power sensor arranged to measure sensor data relating to environmental conditions relevant to the system. One benefit of this embodiment is that it enables system feedback for optimisation of the actual efficiency of the downhole charging system.

Also, the primary side may further comprise a control receive block, the secondary side further comprises a control transmit block, wherein said control receive block and control transmit block together form a link configured to transfer control data and/or sensor data between the primary side and the secondary side. This is useful when sensor data or control commands need(s) to be transferred between the primary side and the secondary side.

Further, the link may be formed between the control receive block and the control transmit block is an inductive interface. One benefit of an inductive interface is that it is more robust and less complex than e.g. electromagnetic interfaces.

Additionally, the controller may be arranged either at the primary side or at the secondary side and said one or more sensors may be arranged at the opposite side. One benefit of this embodiment is that only one controller may be used to communicate with sensors on either the primary and/or on the secondary side.

The tunable power source may be tunable and one or more sensors may be configured to measure sensor data relating to the saturation either of, or all of, the coils and the controller may be configured to control the power of the power source such that saturation is avoided. One benefit of this solution is that the coil will not saturate and the charging system efficiency and coil dimensioning can be optimised.

Moreover, the source frequency of the power source may be tunable and the controller may be configured to tune the source frequency such that it matches the resonance frequency of the tunable element and the coil. One benefit of this embodiment is that it provides further tuning possibilities and enables tuning over a wider bandwidth.

The tunable element may be a tunable capacitor. This is useful since a controlled capacitance will efficiently create an LC resonance circuit with the coil.

Furthermore, the source frequency may be between 50 kHz and 500 kHz and preferably between 100 kHz and 200 kHz. This is beneficial since these frequencies provide a good trade-off between e.g. coil size, absorption of magnetic flux, coil losses etc.

The present invention also relates to a downhole system comprising a well tubular metal structure arranged in a borehole, a downhole tool configured to be arranged inside the well tubular metal structure, and a power receiving unit arranged outside the well tubular metal structure so that power is transferred from the downhole tool to the power receiving unit by means of induction, wherein the power receiving unit comprises the secondary side of the charging system previously described, and the downhole tool comprises the primary side.

The present invention also relates to a method for a controller of a downhole charging system as described above configured to control the impedance of at least one tunable element connected to a coil is presented. The charging system comprises a primary side and a secondary side. The primary side comprises a power transmit coil arranged to receive power from a power source with a source frequency. The source frequency could in some embodiments be very low, essentially corresponding to DC. The secondary side comprises a power receive coil arranged to deliver power to a load. The method comprises the steps of first calculating a desired impedance for the tunable element such that the impedance of the LC resonance circuit has its resonance frequency at the desired transmit frequency. Then updating the impedance of the tunable element such that the impedance of the tunable element is at the desired impedance. This method is advantageous since it allows for auto-tuning of the resonance frequency in order to optimise power transfer of a downhole charging system.

The controller may be in communication with one or more sensors comprised in the charging system. The method further comprising, before the step of calculating, the step of acquiring sensor data from one or more sensors. This is beneficial since it allows for the controller use of the sensor data when controlling the impedance of the tunable element.

Finally, the step of acquiring further sensor data also comprises storing the acquired sensor data with a current impedance of the tunable element. The step of calculating further comprises comparing historical sensor data and its associated impedance value with the current sensor data and its associated impedance to determine if the impedance of the tunable element should be increased or decreased. One advantage of this embodiment is that it introduces full feedback in the control of the impedance more advanced control methods are possible, e.g. P-, PI-, PID-regulators.

Embodiments of the invention will be described in the following; references being made to the appended diagrammatical drawings which illustrate non-limiting examples of how the inventive concept can be reduced into practice.

Fig. 1a shows a partly cross-sectional view of a downhole system having a downhole tool,

Fig. 1b shows the downhole system in a borehole of a reservoir for charging a device outside a well tubular structure,

Fig. 1c is a schematic view of a downhole charging system according to an embodiment,

Figs. 2a-c are schematic views of a power transmit block of a downhole charging system,

Fig. 3 is a schematic view of a tunable element forming part of a downhole charging system according to an embodiment,

Fig. 4 is a schematic view of a power receive block of a downhole charging system,

Fig. 5 is a schematic view of a power detect block of a downhole charging system,

Figs. 6-9 are schematic views of a downhole charging system according to different embodiments,

Fig. 10 is a schematic view of a downhole charging system, and

Figs. 11a-b are schematic views of methods for a downhole charging system according to different embodiments.

Hereinafter, certain embodiments will be described more fully with reference to the accompanying drawings. The invention may, however, be embodied in many different forms and should not be construed as limited to the embodiments set forth herein. Rather, these embodiments are provided by way of example so that this disclosure will be thorough and complete, and will fully convey the scope of the invention, such as it is defined in the appended claims, to those skilled in the art.

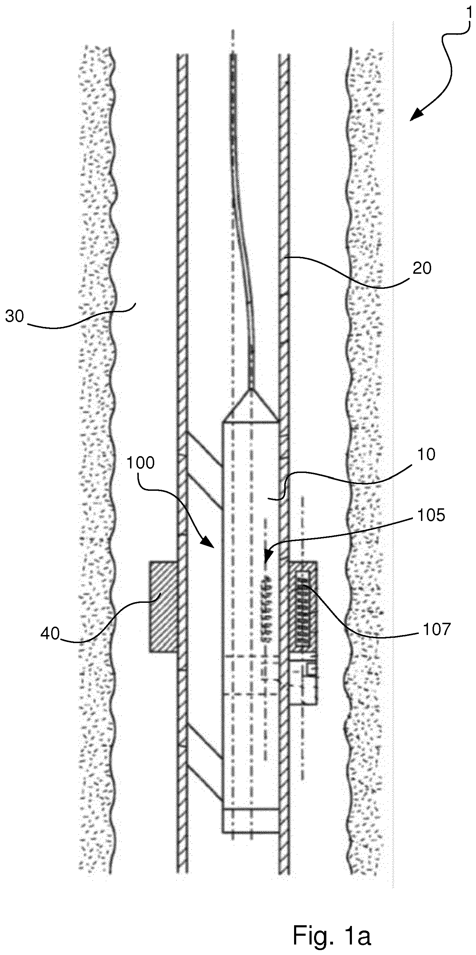

Fig. 1a shows a downhole system 1 comprising a downhole tool 10 being inserted into a well tubular structure 20. The well tubular structure 20 is arranged for producing hydrocarbon-containing fluid from a reservoir 30.

The downhole tool 10 is provided with electronic equipment to form part of a charging system 100, as will be explained in the following description, and in particular to form a primary side 105 of the charging system 100.

The downhole system 1 further comprises a power receiving unit 40 being arranged outside the well tubular metal structure 20 in order that power is transferred from the downhole tool 10 to the power receiving unit 40 by means of induction. Hence, the power receiving unit 40 comprises electronic equipment to form a secondary side 107 of the charging system 100.

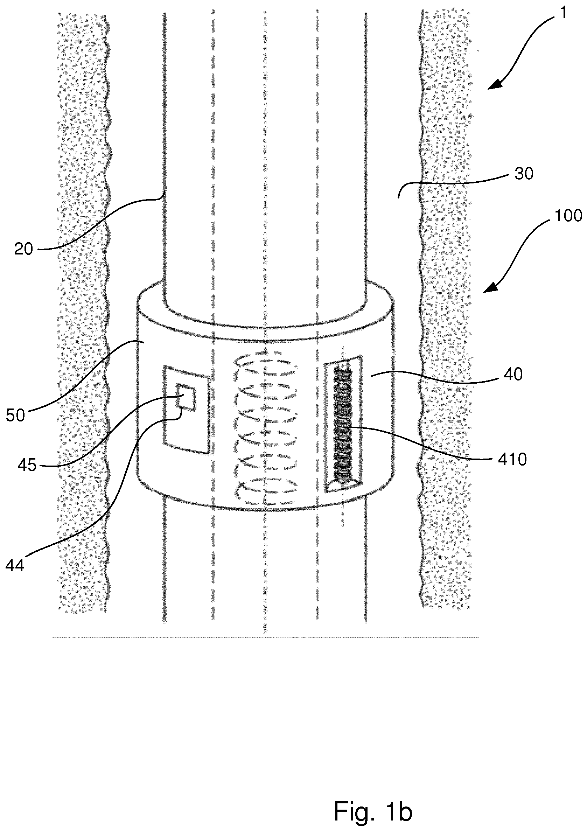

In Fig. 1b parts of the charging system 100 are shown in further detail. As can be seen, the power receiving unit 40 arranged outside the well tubular metal structure 20, and the power receiving unit 40 comprises an inductive coil 410 forming part of the secondary side 107 of the charging system 100. The downhole completion system 1 further comprises a power consuming device 44, e.g. comprising a sensor 45, arranged outside the well tubular structure 20 and configured to receive power from the power receiving unit 40. As can be seen in Fig. 1b, the power consuming device 44 and the power receiving unit 40 can be arranged in a sleeve 50 surrounding the well tubular structure 20.

Typically, the power consuming device 44 includes the downhole sensor 45 or another component being capable of monitoring downhole conditions, or e.g. being capable of transmitting data. The sensor may e.g. be configured to measure a property of the well, such as a pressure, a temperature, a fluid content or a fluid flow. The sensor may not have a battery and it may be powered solely through the power receiving unit 40 so that the sensor only performs measurements when the downhole tool 10 is in the vicinity of the power receiving unit 40 to power the sensor.

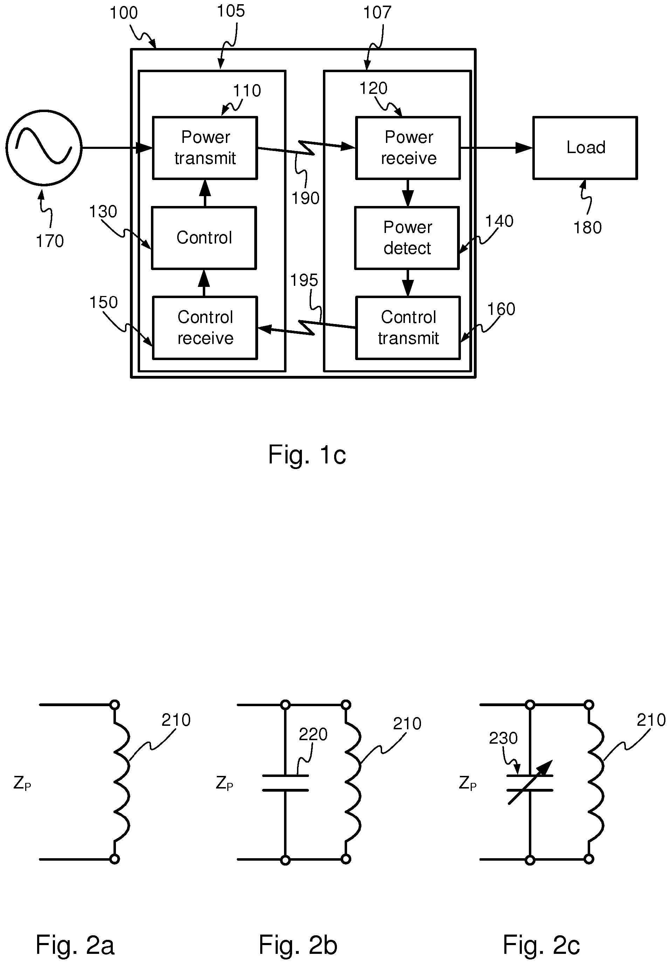

With reference to Fig. 1c, a block diagram of an embodiment of a downhole charging system 100 is shown. The charging system 100 comprises a primary side 105 and a secondary side 107. The primary side 105 comprises a power transmit block 110, a control block, or a controller 130, and a control receive block 150. The secondary side 107 comprises a power receive block 120, a power detect block 140, and a control transmit block 160. In the following description, reference is made to the control block 130 as well as to the controller 130. It should thus be realised that these terms could be used interchangeably, simply addressing that all functionality of the schematically described "control block" is realised by means of the controller 130.

The power transmit block 110 is arranged to inductively transfer power to the power receive block 120 of the secondary side 107 over a power transfer interface 190. The power transmit block 110 is controlled by the control block 130 receiving input signals from the control receive block 150. The control receive block 150, receives signals over a control transfer interface 195 from the control transmit block 160 of the secondary side 107. The power detect block 140 is connected to form a link between the power receive block 120 and the control transmit block 160. The power transmit block 110 is powered by a power source 170 and the power receive block 120 is, on one side, terminated in a load 180.

Again with respect to Figs. 1a-b, the downhole tool 10 is configured to form the primary side 105, while the power receiving unit 40 is configured to form the secondary side 107.

The downhole charging system 100 transfers power from the power source 170 on the primary side 105 to the load 180 on the secondary side 107 and the transferal is by means of inductive coupling, illustrated in Fig. 1c as the power transfer interface 190. The inductive coupling is achieved by the coupling between the coils comprised in the power transmit block 110 and the power receive block 120 respectively. This will be explained in further detail below. The power received by the power receive block 120 is evaluated by the power detect block 140. The evaluated received power is transferred back to the control receive block 150 by the control transmit block 160. The control receive block 150 transfers the evaluated received power to the control block 130 and the control block uses the evaluated received power to control the power transmit block 110.

The arrangement of the power transmit coil 210 comprised in the power transmit block will now be explained in more detail with reference to Figs. 2a, 2b and 2c. The disclosure is directed to a power transmit coil 210 but this should not be seen as limiting as this is just as applicable to coils in other parts of the downhole charging system 100. This will be further clarified by exemplifying embodiments below. In Fig. 2a, the power transmit coil 210 is arranged as a single ideal element with a primary impedance $Z_P$ according to Equation 1.

$$\text{Eqn. 1} \qquad\qquad Z_P = j\omega L_{PTx}$$

In Equation 1, $L_{PTx}$ is the inductance of the power transmit coil 210 in Henry, H and $\omega$ is the angular frequency calculated from the frequency f in Hertz, Hz, of the source as described in Equation 2.

$$\text{Eqn. 2} \qquad\qquad \omega = 2\pi f$$

The primary impedance will increase linearly with frequency in the arrangement of Fig. 2a. In Fig. 2b, a primary side ideal capacitor 220 is introduced and the impedance $Z_P$ may be calculated according Equation 3.

$$\text{Eqn. 3} \qquad\qquad Z_P = \frac{j\omega L_{PTx}}{1 - \omega^2 C_P L_{PTx}}$$

In Equation 3, $C_P$ is the capacitance in Farad, F, of the primary side capacitor 220. Equation 3 is a quadratic function and will have a maximum value at resonance which occurs when the criteria of Equation 4 is fulfilled.

$$\text{Eqn. 4} \qquad \omega_0^2 C_P L_{PTx} = 1 <=> \omega_0 = \frac{1}{\sqrt{C_P L_{PTx}}} <=> f_0 = \frac{1}{2\pi\sqrt{C_P L_{PTx}}}$$

In Equation 4, $\omega_0$ is the angular frequency at resonance and $f_0$ is the resonance frequency. At resonance, the voltage across $Z_P$ will be maximised (Ohms law) and thus the absolute value of the magnetic flux of the coil (Faraday's Law) will be maximised. The details regarding Faraday's Law are well known in the art and not essential for the implementation of the downhole charging system 100, it will suffice to know the effect of the law, i.e. the (absolute) induced magnetic flux will be maximised at the resonance frequency of the coil.

Since the power transmit coil 210 of the power transmit block 110 is not ideal and parasitic effects from stray capacitance, stray inductances, and resistances will be present, the relation in Equation 1 is not relevant for the power transmit block 110. This means that the power transmit block 110 will have a resonance frequency that will maximise the magnetic flux introduced into the power transmit coil 210 and consequently maximise the power available to the power transfer interface 190. Designing the charging system to operate at its resonance frequency would be desirable and should be targeted. This means that having the power source 170 operating at a source frequency $f_S$ is the same as the resonance frequency of the power transmit block $f_0$. In order to achieve this in the harsh environment downhole, an adaptive solution needs to be formulated since e.g. temperature and pressure will cause both parasitic impedances and the source frequency $f_S$ to shift in an uncontrolled manner.

By introducing a tunable element 230, with a tunable impedance, in the power transmit block 110 it will be possible to tune the resonance frequency $f_0$ such that it tracks the optimised system impedance. In Fig. 2c, this is depicted by the introduction of a tunable element 230 in parallel with the power transmit coil 210. The skilled person will, after reading this disclosure, understand that the introduction of the tunable capacitor in series is also a viable option although this may increase the resistive losses of the power transmit block 110 since the equivalent series resistance of capacitors is usually comparably high. Having the tunable element 230 comprised in the power transmit block 110 will allow for the control of the resonance frequency of the power transmit block 110 by tuning of the tunable element 230. This makes it possible to ensure that the resonance frequency $f_0$ tracks the source frequency $f_S$ and that a maximum magnetic flux is available to the power transfer interface 190.

The disclosure given above with reference to Figs. 2a-c has assumed no resistive losses in the power transmit block 110. These equations and calculations may be easily adapted by a skilled person to also include resistive component and effects. The design may be made in such a way that the resistive losses are kept at a minimum keeping the Q-value high, and consequently the bandwidth low, of the power transmit block 110. However, there is a trade-off between cost of low resistive losses and granularity of the tunable element 230 since too large steps on the tunable capacitor 230 will introduce a risk of not being able to tune the resonance frequency $f_0$ such that it tracks the source frequency $f_S$.

It will also be possible to instead of, or in combination with, the tunable element 230, tune the source frequency $f_S$. The cost of a tunable source may be less cost effective than the cost of a tunable element but the option of tuning the source frequency $f_S$ may be available.

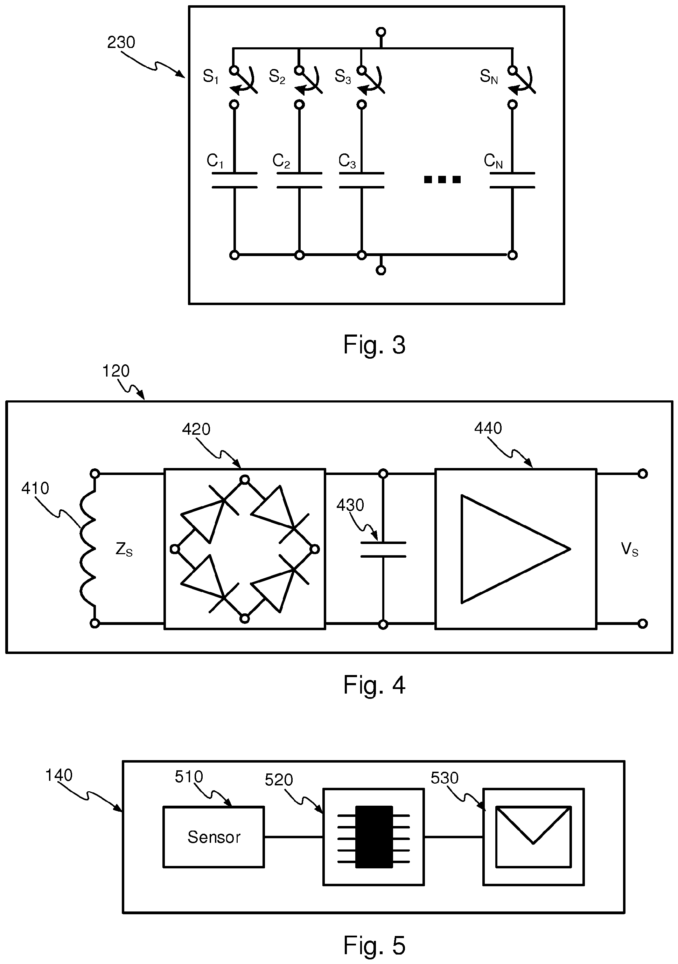

The tunable element 230 may be any kind of tunable element 230 suitable to control the resonance frequency $f_0$ of the power transmit block. With reference to Fig. 3, one embodiment of the tunable element 230 is depicted as an array of N parallel capacitors $C_1$-$C_N$ of suitable values arranged with N individual switches $S_1$-$S_N$. The capacitance of each capacitor may typically be set according to Equation 5 with N in the range of 1 to N allowing linear control of the capacitance with a step size of $C_1$.

$$\text{Eqn. 5} \qquad\qquad C_n = C_1 \cdot 2^{n-1}$$

These, and similar, arrangements of tunable capacitors are known in the art. Devices utilising different kinds of switches, e.g. MEMS, CMOS etc. are available with numerous kinds of control interfaces, e.g. SPI, parallel, analogue etc. and the skilled person will, after reading this disclosure, understand that any kind of tunable capacitance may be used.

Returning to Fig. 1c, it is now clear that the power transmit block 110 makes a maximum magnetic flux available to the power transfer interface 190. The power transfer interface 190 couples power to the power receive block 120 and this coupling will be inductive, i.e. the power receive block 120 will comprise a power receive coil 410 as shown in Fig. 4. The power receive coil 410 will be excited by the magnetic flux delivered through the power transfer interface 190 and a voltage will be induced across the power receive coil 410. The power transfer interface 190 may include any material or medium and the skilled person will know how to dimension the power transfer interface 190, and he understands that the distance between the power receive coil 410 and the power transmit coil 210 should be kept as short as possible.

Fig. 4 illustrates a block schematic overview of one embodiment of the power receive block 120. The power receive block 120 comprises a power receive coil 410, a rectifying circuitry 420, an optional bulk capacitor 430 and a power conditioning arrangement 440. The secondary side 107 of an inductive coupling architecture is well known in the art and the details of the different blocks will not be thoroughly described. The different options available in achieving e.g. the power conditioning arrangement 440 such as e.g. an LDO or a buck and/or boost converter are well understood by the skilled person. It should be mentioned that the power receive block 120 may also be arranged to comprise a secondary side 107 and a tunable element 230 in a similar manner as described with reference to the primary side 105.

With reference to Fig. 5, the power detect block 140 will be described. The power detect block 140 is connected to the power receive block 120 and comprises at least one sensor 510, a power sensing controller 520 and a communication interface 530. The power detect block 140 is arranged to evaluate the power received by the power receive block 120. The evaluation may be done in numerous ways e.g. by measuring the induced voltage across the power receive coil 410, the power available at the input of rectifying circuitry 420, the rectified voltage across the bulk capacitor 430, the current delivered to or from the power conditioning arrangement 440 or from a control signal comprised in the power conditioning arrangement 440. Depending on where the power is evaluated, different types of sensors 510 or combinations of sensors 510 will be used e.g. power sensor, current sensor or voltage sensor and the skilled person will know what sensor to use where. The power sensing controller 520 may be realised by a processing means e.g. a microprocessor, an MCU, a DSP, any suitable ASIC or IC and necessary peripherals e.g. volatile and/or non-volatile memories, power management etc. The communications interface 530 is arranged to interface with the control transmit block 160 and packages at least the evaluated power in a format that the control transmit block 160 can communicate across the control transfer interface 195. The communication interface 530 and/or the sensor 510 may be comprised in the power sensing controller 520 and the communication interface 530 may also be implemented as software code executed by the power sensing controller 520.

The need for processing of the data from the sensor(s) 510 by the power sensing controller 520 will be greatly dependent on the distribution of the charging system. If a lot of processing is done by the power sensing controller 520, the complexity of the control block 130 may be reduced and vice versa. Although the discussion has regarded power evaluation of the power detect block 140, this block may comprise much more and all data may be comprised in the data from the communication interface 530. The power detect block 140 may comprise sensors 510 to measure temperature of the charging circuitry and may be in communication with the load 180 on the secondary side 107 such that the load may request e.g. an increase or a reduction in power. There may also be information regarding e.g. dV/dt or dT/dt of a battery being changed on the secondary side 107 being fed back over the control transfer interface 195.

The control transmit block 160 is arranged to transfer the data received from the communications interface 530 over the control transfer interface 195 to the control receive block 150. The control transmit block 160 is closely linked to both the control transfer interface 195 and the control receive block 150 since the three blocks may be interpreted as comprising or being comprised by a control communication system. Depending on the control transfer interface 195 chosen for an implementation, the control communication system will be designed accordingly. The control communication system may be realised by an inductive data link similar to e.g. RFID. It may further be realised as a direct electromagnetic wireless communication e.g. Bluetooth, WiFi, ANT+, Z-Wave, IEEE802.15.4 etc. or indirectly where the control transfer interface 195 comprises a core network and a backend where the control transmit block 160 may communicate using any cellular technique or low power WAN e.g. Sigfox, LoRa etc.

The data received by the control receive block 150 over the control transfer interface 195 is communicated to the control block 130. The control block 130 comprises a power controller that may be realised as any of, or a combination of e.g. a microprocessor, an MCU, a DSP, any suitable ASIC or IC and necessary peripherals e.g. volatile and/or non-volatile memories, power management etc. The power controller is arranged to evaluate the data received from the control receive block 150 and to determine a suitable control command to be communicated to the power transmit block 110. The control command may comprise settings or commands configured to change the impedance of the tunable element 230. The change may be either an increase or a decrease depending on e.g. a positive or negative change in evaluated power delivered to the load 180 compared to a prior evaluation of the power. Naturally, the control block 130 may be configured to be arranged such that a set of previous impedance values are stored together with their respective evaluated power delivered to the load 180. There may be a configurable validity timer associated with each of the stored values and the control block 130 may be arranged to reset or remove values that are considered obsolete due to the lapse of the validity timer. Many other factors may render the stored values obsolete e.g. temperature shifts, humidity changes etc.

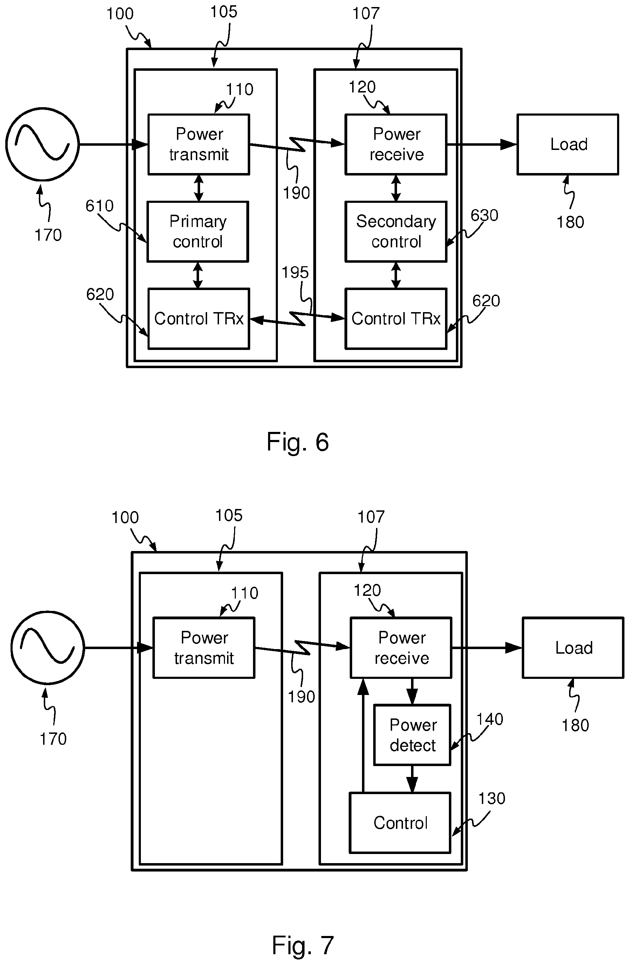

In Fig. 6, another embodiment of a downhole charging system 100 is shown. One of the differences compared to the embodiments previously described is that the control transfer interface 195 is bi-directional, as is the communication between the blocks on the primary side 105 and the secondary side 107. Not all communication needs to necessarily be bi-directional but it will depend on the control algorithm implemented. The control block 130 may be replaced by a primary control block 610 and the power detect block 140 may be replaced by a secondary control block 630. The control receive block 150 and the control transmit block 160 are each replaced with a control TRx block 620 that is able to both transmit and receive information over the control transfer interface 195. Having the control transfer as a bi-directional interface enables full exchange of data between e.g. the primary control block 610 and the secondary control block 630.

In this embodiment, both the primary control block 610 and the secondary control block 630 may comprise a power evaluation arrangement e.g. similar to the power detect block 140 that was described with reference to Fig. 5. An arrangement like this may allow control of one tunable element 230 on the primary side 105, and one tunable element 230 on the secondary side 107. This would enable tuning both the power transmit coil 210 and the power receive coil 410 to resonance. This arrangement enables the optional replacement of either the primary control block 610 or, preferably, the secondary control block 630 with a scaled down version since only one of them needs to keep track of e.g. the control algorithm, historical data etc.

With reference to Fig. 7, the power receive block 120 may, in one embodiment, be arranged with a tunable element 230 (see Fig. 2c). In order to efficiently control this, the control block 130 may have to be implemented on the secondary side. This embodiment would enable tuning of the power receive coil 410 to resonance without the need of the control transfer interface and the control receive block and the control transmit block. The benefit of the solution described with reference to Fig. 1 earlier, is that a downhole charging system may comprise numerous sensors and the cost of the sensor would increase and it may make more sense to optimise the single primary side 105.

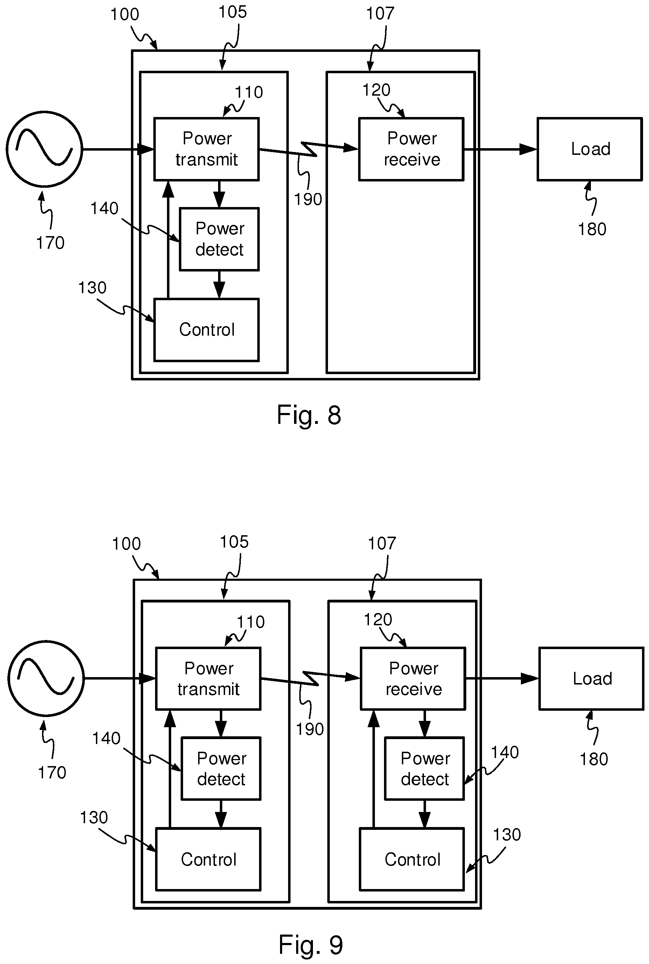

Another embodiment is shown in Fig. 8 where the power transmit coil may again be arranged with a tunable element. In order to efficiently control this, the control block 130 is in this embodiment implemented on the primary side 105. This embodiment would enable tuning of the power transmit coil 210 to resonance without the need of the control transfer interface and the control receive block and the control transmit block.

With reference to Fig. 9, another embodiment is shown that comprises a power detect block 140 and a control block 130 on both the primary side 105 and the secondary side 107. This embodiment may allow resonance tuning on both the primary side 105 and the secondary side 107.

The benefit of the embodiments described with reference to Fig. 1 and Fig. 6, embodiments with the control transfer interface 195, over the embodiments of Fig. 7 to Fig. 9, is that a downhole environment may be provided with numerous sensors and the cost of the sensors would increase and it may therefore make more sense to optimise the single primary side. Furthermore, if e.g. a battery is being charged on the secondary side, battery and charging data may be communicated over the control transfer interface 195 thus e.g. allowing charging of more complex battery chemistries, optimising charging and extending the life of the battery. Charging status may naturally be evaluated in the embodiments without the control transfer interface but it may not be as accurate, quick or energy efficient.

Having the power source 170 controllable from the downhole charging system 100 may enable further optimisation opportunities. One opportunity, as mentioned earlier, would be to tune the frequency $f_s$ of the power source 170 but other options are e.g. tuning the power of the power source 170. By tuning the power of the power source 170, it will be possible to reduce the power of the power source 170 when the load 180 is either fully charged or almost fully charged. Further to this, it may be possible to control the power of the power source 170 such that saturation of the power transmit coil 210 and/or the power receive coil 410 is avoided.

The skilled person realises that the arrangements of what is measured where and how information is shared within the downhole charging system 100 are numerous.

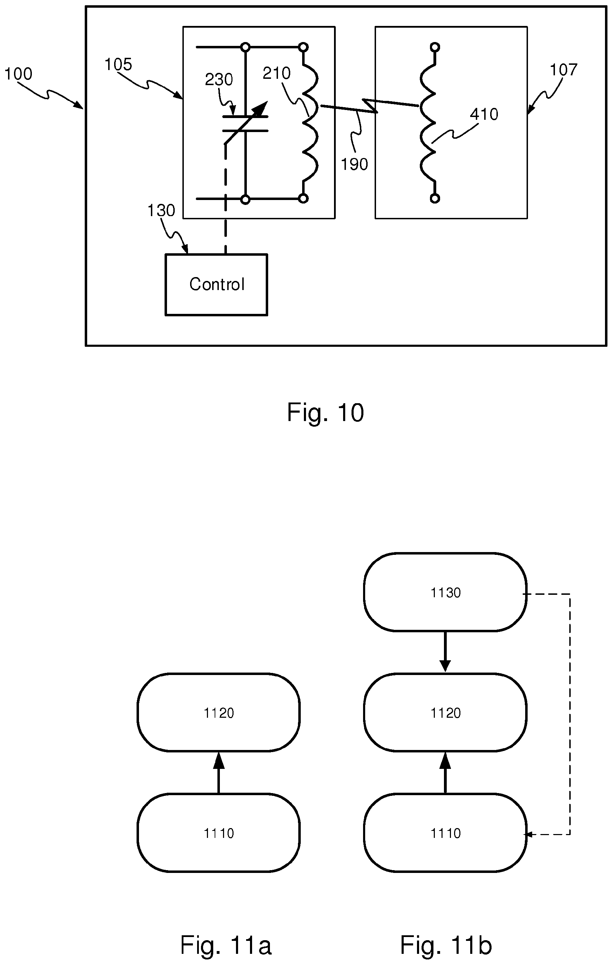

With reference to Fig. 10, a preferred embodiment of the downhole charging system 100 is shown. The downhole charging system 100 comprises a primary side 105 and a secondary side 107 wherein the primary side 105 comprises a tunable element 230 connected to a power transmit coil 210 wherein the power transmit coil is arranged to receive power from a power source. The source is arranged to deliver power with a source frequency $f_s$ and the waveform may be any waveform but preferably a sinusoidal waveform. The secondary side 107 comprises a power receive coil 410 that is arranged to deliver received power to a load. The impedance of the tunable element 230 is controlled by a controller 130 (represented by the control block 130 in several figures) and the impedance is tuned such that the resonance frequency of the power transmit coil 210 and the tunable element 230 is the same as or close to the source frequency $f_S$.

The embodiment described above, is described with the tunable element 230 on the primary side 105 but placing the tunable element 230 on the secondary side 107 would be a minor change. The controller 130 would in this embodiment base the tuning on known parameters such as the inductance of the coil it is connected to and the source frequency $f_s$. These parameters may be used with e.g. Equation 4 to calculate an impedance value for the tunable element 230.

As seen from previous embodiments, the charging system 100 may be further evolved to include one or more sensors. These sensors may be any kind of suitable sensor, not only adapted to measure explicit parameters relating to power delivered to the load e.g. voltage probes, current probes, power detectors etc., but also to parameters relating to drift and spread of the charging system, e.g. temperature sensor, pressure sensor, humidity sensor or other environmental sensors. These sensors are configured to communicate sensor data to the controller and the controller may be configured to use the sensor data when determining what impedance value of the tunable element to configure.

Presented below are different methods, executable by one or more controllers 130 controlling one or more tunable elements 230. Each of the tunable elements 230 are connected to a coil with an inductance (L) and the downhole charging system 100 is equipped with a power source 170 operating at a source frequency $f_s$. The one or more controllers are suitable to be used with a downhole charging system 100.

In a first embodiment, with reference to Fig. 11a, the controller 130 is basing its tuning on system parameters, e.g. the inductance of the coil (L) and the source frequency $f_s$. These parameters are used to calculate 1110, with e.g. Equation 4, an impedance value for the tunable element 230. After a desired impedance value has been calculated, the tunable element is updated 1120 with the desired impedance value.

In a second embodiment, with reference to Fig. 11b, the downhole charging system 100 is further arranged to comprise one or more sensors, e.g. one or more temperature sensor, pressure sensor, voltage probe, current probe or power detector. In this embodiment, the controller 130 may start with acquiring 1130 sensor data from one or more sensors and then, using that sensor data, optionally in combination with system parameters, to calculate 1110 a desired impedance value of the tunable element 230. After a desired impedance value has been calculated, the tunable element 230 is updated 1120 with the desired impedance value.

In a further embodiment, still referencing Fig. 11b, one of the sensors is a sensor arranged to evaluate a metric relevant to the power delivered to the load 180 e.g. a voltage probe, current probe or power detector arranged in a suitable manner. The controller may further be arranged with an internal feedback that allows the control of the impedance as a function of the power delivered to the load 180. This may be realised by having the step of acquiring 1130 sensor data further comprising storing a current value from the sensor together with a current impedance value of the tunable element 230. The calculate step 1110 may further comprise comparing historical sensor data and its associated impedance value with the current sensor data and its associated impedance to determine e.g. if the impedance of the tunable element 230 should be increased or decreased and to what amount.

The source frequency $f_s$ has been described as a sinusoidal frequency. The skilled person realises that the teachings disclosed herein are applicable also to a source of a direct current (DC) controlled by a switch. In such a scenario e.g. the switching speed, duty cycle, frequency etc. may be used to control and optimise the power transfer. This may be done stand alone or in combination with other embodiments previously disclosed.

Methods associated with control systems with or without feedback are well known in the art. Further details of how to design the controller 130 in order to e.g. as quickly as possible tune the resonance frequency will, for this reason, not be explicitly disclosed.

**Claims**

1. A downhole charging system (100) for charging a power receiving unit arranged outside of a well tubular metal structure, comprising a primary side (105) and a secondary side (107), wherein
the primary side (105) comprises a power transmit coil (210) arranged to receive power from a power source (170) with a source frequency ($f_s$) and the secondary side (107) comprises a power receive coil (410) arranged to deliver power to a load (180),

the power transmit coil (210) and the power receive coil (410) are further arranged such that they are inductively coupled, and

the primary side (105) and/or the secondary side (107) comprise(s) at least one tunable element (230) having an impedance and being connected to the coil (210, 410) on the same side as the tunable element (230), wherein said system (100) further comprises at least one controller (130) configured to control the impedance of the tunable element (230) such that the impedance of the tunable element (230) and the coil (210, 410) on the same side as the tunable element (230) is optimised in view of power transfer.

2. The downhole charging system (100) according to claim 1, further comprising one or more sensors (510) configured to communicate sensor data to the controller (130), wherein the controller (130) is arranged to control the impedance of the tunable element (230) based on the sensor data.

3. The downhole charging system (100) according to claim 2, wherein the one or more sensors (510) comprise(s) an environmental sensor arranged to measure sensor data relating to environmental conditions relevant to the system (100).

4. The downhole charging system (100) according to claim 2 or 3, wherein the one or more sensors (510) comprise(s) a voltage sensor, a current sensor or a power sensor configured to measure sensor data relating to the power delivered to the load (180).

5. The downhole charging system (100) according to any of the claims 2-4, wherein the primary side (105) further comprises a control receive block (150), the secondary side (107) further comprises a control transmit block (160), wherein said control receive block (150) and control transmit block (160) together form a link configured to transfer control data and/or sensor data between the primary side (105) and the secondary side (107).

6. The downhole charging system (100) according to claim 5, wherein the link formed between the control receive block (150) and the control transmit block (160) is an inductive interface.

7. The downhole charging system (100) according to claim 5 or 6, wherein the controller (130) is arranged either at the primary side (105) or at the secondary side (107) and said one or more sensors being arranged at the opposite side.

8. The downhole charging system (100) according to any of the claims 2-7, wherein the power source (170) is tunable, wherein one or more sensors (510) is/are configured to measure sensor data relating to the saturation either of, or all of, the coils (210, 410), and wherein the controller (130) is configured to control the power of the source (170) such that saturation is avoided.

9. The downhole charging system (100) according to any of the preceding claims, wherein the source frequency ($f_s$) of the power source (170) is tunable and wherein the controller (130) is configured to tune the source frequency ($f_s$) such that it matches the resonance frequency of the tunable element (230) and the coil (210, 410).

10. The downhole charging system (100) according to any of the preceding claims, wherein the tunable element (230) is a tunable capacitor.

11. The downhole charging system (100) according to any of the preceding claims, wherein the source frequency ($f_s$) is between 50 kHz and 500 kHz and preferably between 100 kHz and 200 kHz.

12. A downhole system comprising:

 - a well tubular metal structure (20) arranged in a borehole,
 - a downhole tool (10) configured to be arranged inside the well tubular metal structure, and
 - a power receiving unit (40) arranged outside the well tubular metal structure so that power is transferred from the downhole tool to the power receiving unit by means of induction,

wherein the power receiving unit comprises the secondary side (107) of the charging system (100) according to any of the preceding claims, and the downhole tool comprises the primary side (105).

13. A method for a controller (130) of a downhole charging system (100) according to any of the preceding claims, the controller being configured to control the impedance of at least one tunable element (230) connected to a coil (210, 410), the charging system (100) comprises a primary side (105) and a secondary side (107), wherein the primary side (105) comprises a power transmit coil (210) arranged to receive power from a source (170) with a source frequency ($f_s$) and the secondary side (107) comprises a power receive coil (410) arranged to deliver power to a load (180), the method comprising:

- calculating (1120) a desired impedance for the tunable element (230) such that the impedance of the tunable element (230) and the coil (210, 410) is optimised in view of power transfer, and
- updating (1110) the impedance of the tunable element (230) such that the impedance of the tunable element (230) is at the desired impedance.

14. The method according to claim 13, wherein the controller (130) is in communication with one or more sensors (510) comprised in the charging system (100), the method further comprising, before calculating (1120), acquiring (1130) sensor data from one or more sensors.

15. The method according to claim 14, wherein acquiring (1130) further comprises storing the acquired sensor data with a current impedance of the tunable element, and calculating (1120) further comprises comparing historical sensor data and its associated impedance value with the current sensor data and its associated impedance to determine if the impedance of the tunable element (230) should be increased or decreased.

Fig. 1a

Fig. 1b

Fig. 1c

Fig. 2a          Fig. 2b          Fig. 2c

230

$S_1$  $S_2$  $S_3$  $S_N$

$C_1$  $C_2$  $C_3$  $C_N$

•••

Fig. 3

120

420

410

440

$Z_S$

430

$V_S$

Fig. 4

140

510

520

530

Sensor

Fig. 5

Fig. 6

Fig. 7

Fig. 8

Fig. 9

Fig. 10

Fig. 11a             Fig. 11b

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/112924 A1 (MACKAY BRUCE A [US] ET AL) 10 May 2012 (2012-05-10) * paragraph [0025] - paragraph [0029] * * figures 1-2 * ----- | 1-15 | INV. E21B41/00 |
| X | US 2018/043463 A1 (PRIETO CARLOS [US] ET AL) 15 February 2018 (2018-02-15) * paragraph [0019] * * figure 2 * ----- | 1,13 | |
| X | GB 2 461 065 A (EXPRO NORTH SEA LTD [GB]) 23 December 2009 (2009-12-23) * the whole document * ----- | 1-15 | |

TECHNICAL FIELDS
SEARCHED      (IPC)

E21B

The present search report has been drawn up for all claims

| Place of search | Date of completion of the search | Examiner |
|---|---|---|
| Munich | 28 November 2018 | Ing, James |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  ...........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 18 17 3880

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2018

| Patent document cited in search report | | | Publication date | Patent family member(s) | | | Publication date |
|---|---|---|---|---|---|---|---|
| US 2012112924 | A1 | | 10-05-2012 | NONE | | | |
| US 2018043463 | A1 | | 15-02-2018 | US | 2018043463 | A1 | 15-02-2018 |
| | | | | US | 2018045007 | A1 | 15-02-2018 |
| | | | | WO | 2018031766 | A1 | 15-02-2018 |
| | | | | WO | 2018031773 | A1 | 15-02-2018 |
| GB 2461065 | A | | 23-12-2009 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 3101220 A1